# FASCICULE DE BREVET EUROPEEN

(11) **EP 2 122 724 B1**
(45) Date de publication et mention de la délivrance du brevet: **25.01.2012**
(21) Numéro de dépôt: 08708840.7
(22) Date de dépôt: 08.02.2008
(51) Int. Cl.: H01M 10/0525

(54) **LIANT POUR ELECTRODE DE SYSTEME ELECTROCHIMIQUE, ELECTRODE COMPRENANT CE LIANT, ET SYSTEME ELECTROCHIMIQUE COMPRENANT CETTE ELECTRODE.**
BINDER FÜR DIE ELEKTRODE EINES ELEKTROCHEMISCHEN SYSTEMS, ELETRKODE MIT DIESEM BINDER SOWIE ELEKTROCHEMISCHES SYSTEM MIT DIESER ELEKTRODE
BINDER FOR THE ELECTRODE OF AN ELECTRO-CHEMICAL SYSTEM, ELECTRODE INCLUDING SAID BINDER, AND ELECTRO-CHEMICAL SYSTEM INCLUDING SAID ELECTRODE

(30) Priorité: 09.02.2007 FR 0753170
(43) Date de publication de la demande: 25.11.2009
(73) Titulaire: Commissariat à l'Énergie Atomique et aux Énergies Alternatives, 75015 Paris (FR); Institut Polytechnique de Grenoble, 38031 Grenoble Cedex (FR)
(72) Inventeur: MEDLEGE, Franck, F-38000 Grenoble (FR); ROUAULT, Hélène, F-38420 Le Versoud (FR); BELGACEM, Naceur, F-38320 Brie et Angonnes (FR); BLAYO, Anne, F-38400 St Martin D'heres (FR)
(74) Mandataire: Ilgart, Jean-Christophe
(86) Numéro de dépôt international: PCT/EP2008/051574
(87) Numéro de publication internationale: WO 2008/101823

(56) Documents cités:
- EP-A- 1 715 536
- WO-A-02/073720
- WO-A-2006/127309

## Description

### DOMAINE TECHNIQUE

L'invention a trait à un liant pour les électrodes de systèmes électrochimiques à électrolyte non aqueux.

En particulier, l'invention a trait à un liant pour les électrodes d'accumulateurs électrochimiques rechargeables à électrolyte organique, notamment pour les batteries au lithium.

L'invention concerne en outre une électrode comprenant ce liant.

L'invention a également trait à une composition électrochimique à électrolyte non aqueux comprenant ladite électrode.

L'invention concerne aussi un accumulateur électrochimique rechargeable à électrolyte non aqueux comprenant une électrode positive et une électrode négative comprenant ledit liant et un électrolyte non aqueux.

Enfin, l'invention est relative à un procédé de préparation d'une électrode comprenant ledit liant.

Le domaine technique de l'invention peut être défini de manière générale comme celui des électrodes mises en oeuvre dans les compositions électrochimiques à électrolyte non aqueux, organique et plus particulièrement comme celui des accumulateurs rechargeables à électrolyte organique tels que les accumulateurs, batteries, au lithium.

Les électrodes des accumulateurs rechargeables à électrolyte organique classique contiennent une matière électrochimiquement active qui constitue une structure d'accueil dans laquelle les cations, par exemple les cations lithium, s'insèrent et se désinsèrent au cours du cyclage. Chaque électrode est obtenue par dépôt d'une encre ou pâte sur un collecteur de courant, ladite encre ou pâte contenant la matière active, éventuellement des additifs conducteurs, un liant polymère et un solvant.

L'utilisation d'un liant polymère pour fabriquer l'électrode vise tout d'abord à assurer la cohésion de la matière active qui est sous forme pulvérulente, sans masquer une part importante de la surface électrochimiquement active. Cet effet dépend des propriétés de mouillage du liant. Une bonne liaison avec la matière active est généralement garantie par l'existence, dans le liant polymère, de groupements donnant lieu à des liaisons chimiques ou hydrogène, comme les hydroxyles, carboxyles ou amides. Un compromis doit cependant être trouvé car une interaction trop forte du liant avec la matière active conduit à un recouvrement trop important des grains de matière active qui entraîne une baisse de la surface active découverte, et par voie de conséquence, de la capacité.

Le liant doit également permettre l'adhésion de l'encre sur le collecteur de courant, l'adhésion sera également garantie par la présence de groupements polaires dans le polymère.

De plus, le liant polymère doit conférer à l'électrode une souplesse suffisante pour la manipulation, en particulier pour supporter l'étape de bobinage, dans le cas du montage d'accumulateurs cylindriques.

Le liant polymère doit accompagner les variations dimensionnelles de la matière active lors des cycles de charge et de décharge.

Le liant polymère doit également être doté de certaines propriétés électrochimiques.

En particulier, il doit être compatible avec les électrolytes utilisés.

Enfin, les réducteurs et les oxydants utilisés comme matériaux actifs étant très puissants, le liant doit posséder une réactivité la plus faible possible pour être capable de supporter, sans dégradation, des conditions extrêmes de fonctionnement.

Il apparaît donc difficile à l'aide d'un seul liant polymère de remplir tous ces objectifs.

De plus, pour être utilisée avec succès sur un équipement d'impression et assurer notamment le transfert de rouleaux en rouleaux la pâte ou encre destinée à préparer l'électrode doit posséder des propriétés rhéologiques et physico-chimiques précises dépendant du type de presse envisagée pour réaliser les électrodes.

Notamment, la tension superficielle de l'encre, et plus particulièrement la composante polaire de l'énergie de surface doit être parfaitement maîtrisée.

Dans les accumulateurs rechargeables au lithium classiques, on emploie couramment comme liant un polymère comme le polytétrafluoroéthylène (PTFE), qui possède une excellente stabilité dans l'électrolyte. Cependant, les propriétés antiadhérentes du PTFE interdisent l'utilisation d'un support conducteur mince tel qu'un feuillard, indispensable à l'obtention de fortes énergies volumiques. De plus, la stabilité du PTFE vis-à-vis des réducteurs puissants est faible en raison de la présence de nombreux atomes de fluor.

Le document EP-A2-0 492 586 décrit un accumulateur rechargeable à électrolyte non aqueux.

Au moins l'une parmi l'électrode positive et l'électrode négative contient un liant dans son solvant, une matière électrochimiquement active, des additifs conducteurs électroniques éventuellement, le tout étant enduit sur un support métallique collecteur de courant de faible épaisseur.

On prépare ainsi un mélange pulvérulent (de poudres) comprenant la matière active en poudre, et éventuellement des additifs conducteurs. Le mélange pulvérulent est ensuite dispersé dans le liant constitué du poly(fluorure de vinylidène) (PVDF) dissout dans un solvant organique tel que la N-vinylpyrrolidone. Le tout constitue une suspension épaisse, ou pâte, cette suspension ou pâte ou encre qui comprend donc notamment la matière active et le liant polymère, est appliquée ensuite sur un collecteur d'électrodes constitué par une feuille métallique telle qu'une feuille de cuivre ou d'aluminium de faible épaisseur.

La suspension est ensuite séchée pour éliminer le solvant.

Dans le cas de l'électrode négative, la matière active est un matériau carboné et le collecteur d'électrode est constitué par une feuille de cuivre par exemple de 20 µm d'épaisseur.

Dans le cas de l'électrode positive, la matière active est notamment du LiCoO₂, le mélange d'électrode peut comprendre en outre un agent conducteur tel que du graphite et le collecteur de courant est constitué généralement par une feuille d'aluminium par exemple de 80 µm d'épaisseur.

Les propriétés mécaniques et électrochimiques du PVDF permettent d'atteindre un bon compromis entre les multiples objectifs exposés. Cependant,son adhérence sur les métaux collecteurs, les feuillards, reste mauvaise, en raison de la faible composante polaire de la tension superficielle du PVDF, et l'ajout de promoteurs d'adhésion est nécessaire ; sinon, la poudre de carbone se détache du métal collecteur tel que le feuillard ou plaque de cuivre, ce qui diminue progressivement la capacité de l'accumulateur. Les accumulateurs utilisant le PVDF ont donc des durées de vie courtes.

En outre, lorsque la température de l'accumulateur s'élève à la suite de courts-circuits ou d'incidents analogues, le PVDF se dépose pour donner du HF qui réagit violemment de manière exothermique avec les composés formés sur l'électrode négative durant la charge, de sorte que l'accumulateur peut se briser ou exploser.

Le document EP-A2-0 606 533 décrit des accumulateurs rechargeables dans lesquels l'électrode négative comprend de la poudre de carbone, dont les particules sont consolidées par un liant qui est une résine polyimide (PI) ou une résine polyvinylformal (PVF). On mélange une solution de PI ou de PVF dans un solvant organique, tel que la NMP, avec une poudre de carbone et si nécessaire un agent conducteur pour préparer une suspension, pâte. Cette pâte est appliquée sur un collecteur de courant métallique en utilisant une râcle, on sèche la suspension sur le métal du collecteur pour éliminer le solvant, puis on durcit la résine par chauffage à haute température, par exemple à 350°C dans le cas d'une résine PI.

Ces liants permettent d'obtenir un bon compromis entre les propriétés électrochimiques et mécaniques, cependant les polyimides sont des polymères coûteux.

Les élastomères tels que le terpolymère éthylène/propylène/diène (EPDM) connu pour sa forte résistance aux attaques chimiques, le latex styrène/butadiène (SBR), le latex acrylonitrile/butadiène (NBR) et les copolymères bloc SIS ou SBS confèrent à l'électrode d'excellentes propriétés mécaniques, mais donnent lieu à des pertes de capacité importantes au cours des cycles.

Des polymères qui présentent l'avantage d'éviter d'avoir recours à des solvants organiques nocifs sont ceux de la famille des latex qui comprend un grand nombre de copolymères en émulsion dans l'eau non listés ci-dessus.

Plus récemment, l'ensemble des copolymères de famille des latex a ainsi été utilisé en association avec un épaississant notamment de la famille des dérivés cellulosiques CMC (carboxyméthylcellulose), HMC (hydroxyméthylcellulose), sous la forme d'émulsions en milieu aqueux.
- Ainsi, le document FR-A-2 766 969 décrit-il un liant pour électrode de système électrochimique à électrolyte non aqueux qui contient du caoutchouc acrylnitrile-butadiène et de la carboxyméthylcellulose. Globalement, l'adhésion du liant, les propriétés mécaniques et électrochimiques des anodes (électrode négative) décrites dans ce document sont satisfaisantes. Cependant, les liants utilisant ces polymères trouvent leurs limites dans la fabrication de cathodes (électrode positive) qui ne peuvent pas donner de bonnes performances électrochimiques. En outre, les polymères de type latex sont mis en oeuvre dans des solvants aqueux ce qui entraîne une corrosion des collecteurs de courant, par exemple en aluminium, par l'eau. Pour remédier à ce problème, le document FR-A-2 790 330 propose, dans le cas de l'utilisation d'un liant mis en solution ou en suspension dans l'eau, de recouvrir la surface du collecteur de courant d'une couche protectrice supposée annihiler toute corrosion. Les collecteurs de courant ainsi traités permettent d'obtenir de bonnes propriétés électrochimiques.

De même, ont été proposés comme liant d'électrode des mélanges de polymères aux propriétés complémentaires par exemple des mélanges d'un polymère appartenant à la famille des élastomères non fluorés qui confère la souplesse à l'électrode, et d'un polymère capable d'assurer des liaisons fortes avec la matière active. Le principal défaut de ces mélanges est, d'une part, la difficulté à obtenir une pâte homogène, en raison de l'incompatibilité des constituants, et, d'autre part, la difficulté à prédire la répartition des liants dans l'électrode finale, les différents composants ayant des propriétés de solubilité ou de coagulation différentes lors de l'étape d'élimination du solvant. En effet, ces mélanges donnent souvent lieu lors du séchage à un phénomène de démixtion.

On constate donc au regard de ce qui précède qu'aucun des liants décrits, qu'il s'agisse des liants comprenant un seul polymère, ou des liants comprenant plusieurs polymères, ne permet de répondre à l'ensemble des critères et exigences énumérés ci-dessus pour un tel liant et d'atteindre tous les objectifs mentionnés plus haut.

Il existe donc un besoin pour un liant pour une électrode de système électrochimique qui permette d'atteindre tous les objectifs, et de répondre à toutes les exigences et à tous les critères, énumérés ci-dessus.

En particulier, il existe un besoin pour un tel liant qui puisse être appliqué facilement sous la forme d'une pâte ou encre utilisable dans tout dispositif de transfert ou d'impression.

Il existe encore un besoin pour un tel liant qui permette de fabriquer des électrodes souples, résistantes, adhérant parfaitement aux collecteurs de courant, et présentant des propriétés électrochimiques et mécaniques excellentes.

Il existe enfin un besoin pour un liant qui ne cause pas de problèmes de corrosion, de toxicité et qui soit peu coûteux.

Le but de la présente invention est de fournir un liant pour électrode de système électrochimique qui réponde entre autres à ces besoins, et qui satisfait notamment aux exigences et critères énumérés plus haut.

Le but de la présente invention est encore de fournir un liant pour électrode de système électrochimique qui ne présente pas les inconvénients, défauts, limitations et désavantages des liants de l'art antérieur et qui résolve les problèmes des liants de l'art antérieur.

Ce but, et d'autres encore, sont atteints, conformément à l'invention, par un liant pour. électrode de système électrochimique à électrolyte non aqueux suivant la revendication 1, ledit liant comprenant un premier polymère, comprenant des fonctions susceptibles de réagir avec un agent de réticulation, réticulé avec un agent de réticulation, le premier polymère réticulé formant un réseau tridimensionnel dans lequel est emprisonné un second polymère choisi parmi les polymères fluorés.

Le liant selon l'invention comprend la combinaison de deux polymères spécifiques dont chacun apporte des propriétés caractéristiques complémentaires.

Un liant comprenant la combinaison des deux polymères spécifiques selon l'invention n'a jamais été décrit précédemment.

L'association de ces deux polymères dans un liant crée une véritable synergie, conduisant à l'obtention simultanée d'un ensemble de propriétés qui n'avaient jamais été présentées auparavant pour un liant, en particulier pour les liants comprenant deux polymères.

Le liant selon l'invention répond à tous les besoins, mentionnés plus haut, satisfait à tous les critères et exigences énumérés ci-dessus et résout les problèmes présentés par les liants de l'art antérieur.

L'un des polymères est un polymère fluoré tandis que l'autre polymère est un polymère comprenant des fonctions susceptibles de réagir avec un agent de réticulation, par exemple des fonctions hydroxyles.

Le premier polymère peut ainsi être défini par exemple comme un polymère hydroxylé, notamment fortement hydroxylé.

Ce premier polymère peut ainsi avoir un indice d'ester compris entre 8 et 200 mg (± 5 à 20 mg respectivement) de KOH par gramme de polymère.

Selon l'invention le mélange de ces deux polymères est de manière étonnante thermodynamiquement stable, c'est-à-dire qu'il est homogène de manière permanente et qu'il ne présente aucune démixtion lors de l'étape de séchage de la pâte ou encre déposée. Cette stabilité thermodynamique est, selon l'invention, due au fait que le premier polymère, par exemple hydroxylé, se trouve sous la forme d'un réseau tridimensionnel, obtenu par une réaction de réticulation entre un agent de réticulation et les fonctions susceptibles de réagir avec cet agent portées par le premier polymère, et que le second polymère fluoré est enchevêtré, enfermé, emprisonné dans ce réseau tridimensionnel.

Les électrodes fabriquées avec le liant selon l'invention sont souples sans addition de plastifiant (ce qui favorise d'éventuelles opérations de bobinage), résistantes, et adhèrent parfaitement aux collecteurs de courant sans qu'il soit nécessaire d'ajouter un promoteur d'adhésion. De plus, des électrodes ont des propriétés électrochimiques excellentes. Aucun phénomène de corrosion n'est à observer et les polymères mis en oeuvre sont non toxiques et peu onéreux.

Un autre avantage du liant selon l'invention est qu'il peut être utilisé pour la fabrication de toutes sortes d'électrodes, à savoir aussi bien de l'anode que de la cathode, sans modifier les conditions d'élaboration et sans ajouter de constituant supplémentaire dans le cas de la cathode.

Le liant selon l'invention comprend donc tout d'abord un premier polymère comprenant des fonctions susceptibles de réagir avec un agent de réticulation.

Lesdites fonctions peuvent être choisies parmi les fonctions hydroxyles, les fonctions amides, les fonctions acides carboxyliques et leurs esters.

De préférence, le premier polymère est un polymère hydroxylé, de préférence fortement hydroxylé, qui peut avoir un indice d'ester tel que mentionné ci-dessus, afin qu'il puisse présenter une forte composante polaire garantissant ainsi une forte énergie de surface proche de 50 mJ/m², pour assurer une bonne adhésion au collecteur de courant et de bonnes propriétés de transfert sur un dispositif d'impression par exemple, de préférence sur un dispositif d'impression flexographique.

Le premier polymère peut ainsi être un polymère hydroxylé, soluble en milieu organique, réticulé ou non (il ne s'agit pas là de la réticulation ultérieure avec l'agent de réticulation pour former le réseau tridimensionnel), susceptible d'être obtenu par hydrolyse d'un polymère non hydroxylé miscible avec les polymères fluorés.

Ce polymère hydroxylé peut être choisi par exemple parmi les poly(alcool vinylique)s (PVA), les copolymères d'alcool vinylique et d'acétate de vinyle (PVA-co-PVAc), et leurs mélanges.

Les PVA-co-PVAc ont de préférence un taux d'hydrolyse supérieur ou égal à 5%, de préférence de 5 à 99%, de préférence encore de 5 à 95%, c'est-à-dire une teneur en PVA (en moles %) supérieure ou égale à 5%, de préférence de 5 à 99%, de préférence de 5 à 95%. La teneur maximale en PVA sera de préférence inférieure ou égale à 95%, de préférence encore inférieure à 95% ; de façon à conserver une part résiduelle de PVAc car le PVAc est miscible avec le second polymère fluoré et sa présence permet d'éviter un phénomène de démixtion trop rapide, à savoir une séparation des deux polymères dans le mélange préparé préalablement à la réticulation.

Les PVA-co-PVAc ont généralement une masse molaire moyenne en poids de 5000 à 600000 g/mol.

L'agent de réticulation est généralement choisi parmi les composés dialdéhydiques en particulier dans le cas où les fonctions du premier polymère susceptibles de réagir avec l'agent de réticulation sont des fonctions hydroxyle.

Ces composés dialdéhydiques peuvent être choisis parmi les dialdéhydes aliphatiques comme l'éthanedial (glyoxal), et le glutaraldéhyde ; et les dialdéhydes aromatiques comme l'o-phtalaldéhyde (phtalaldéhyde) ; le m-phtalaldéhyde (isophtalaldéhyde), le p-phtalaldéhyde (térephtalaldéhyde), le 2,6-pyridine dicarbaldéhyde et le 2,5-thiophènedicarbaldéhyde.

Le liant comprend généralement de 2 à 5% en poids d'agent de réticulation par rapport au poids du premier polymère.

La structure du premier polymère, lorsqu'il s'agit d'un PVA-co-PVAc, après réticulation avec un agent de réticulation de la formule des dialdéhydes cités plus haut répond à la formule suivante : 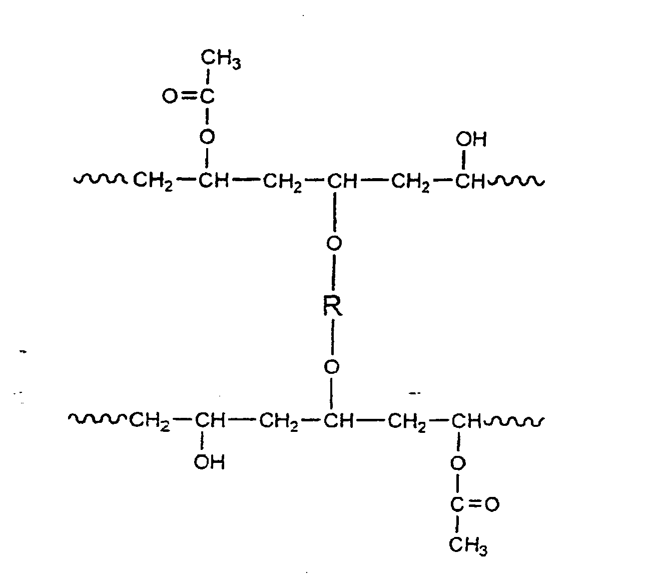 dans laquelle R représente : 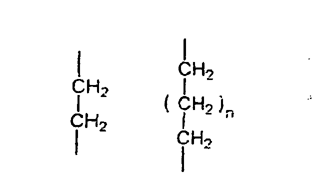 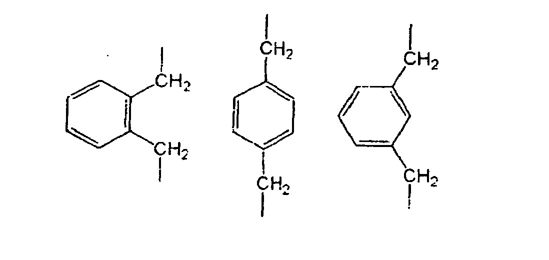 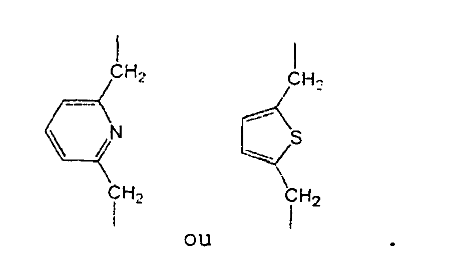 où n est un nombre entier de 0 (pour l'éthanedial) à 10 par exemple 1, 2, 3, 4, 5, 6, 7, 8, 9.

De préférence n = 0 car l'éthanedial et la plus réactive des dialdéhydes citées, ce qui permet une réticulation très rapide à des températures comprises entre 20 et 50°C. De plus, l'éthanedial possède une température d'ébullition de 50°C, ce qui garantit l'absence dans l'électrode finale après l'étape de séchage à 80°C d'éthanedial résiduel n'ayant pas réagi.

Le second polymère peut être choisi parmi les polymères du fluorure de vinylidène (PVDF) ; les copolymères de celui-ci, par exemple avec l'hexafluoropropylène : à savoir les poly(fluorure de vinylidène-hexafluoropropylène)s (PVDF-HFP) ; et leurs mélanges.

Le liant selon l'invention comprend généralement de 10 à 90% en poids du premier polymère et de 10 à 90% en poids du second polymère par rapport au poids total du liant.

L'invention concerne en outre une électrode de système électrochimique à électrolyte non aqueux comprenant un liant tel que décrit ci-dessus, une matière électrochimiquement active d'électrode positive ou négative, éventuellement un ou des additifs conducteurs électroniques, et un collecteur de courant.

En particulier, cette électrode peut être une électrode positive d'un accumulateur électrochimique rechargeable à électrolyte non aqueux.

Dans une telle électrode positive la matière électrochimiquement active peut être choisie, parmi LiCoO₂ ; les composés dérivés de LiCoO₂ obtenus par substitution de préférence par Al, Ti, Mg, Ni et Mn, par exemple LiAlₓNi_{y}CO_{(1-x-y)}O₂ ou x <0,5 et y <1, LiNiₓMnₓCo₁₋₂ₓO₂; LiMn₂O₄ ; LiNiO₂ ; les composés dérivés de LiMn₂O₄ obtenus par substitution de préférence par Al, Ni et Co ; LiMnO₂ ; les composés dérivés de LiMnO₂ obtenus par substitution de préférence par Al, Ni, Co, Fe, Cr et Cu, par exemple LiMn_{0,5}Ni_{0,5}O₂ ; les olivines LiFePO₄, Li₂FeSiO₄, LiMnPO₄, LiCoPO₄ ; les phosphates et sulfates de fer hydratés ou non ; LiFe₂(PO₄)₃; les phosphates et les sulfates de vanadyle hydratés ou non, par exemple VOSO₄ et LiₓVOPO₄ ; nH₂O (0<x<3, 0<n<2) ; Li₍₁₊ₓ₎V₃O₈, 0<x<4 ; LiₓV₂O₅, nH₂O, avec 0<x<3 et 0<n<2 ; et leurs mélanges.

Ladite électrode peut aussi être une électrode négative d'un accumulateur électrochimique rechargeable à électrolyte non aqueux.

Dans une telle électrode négative, là matière électrochimiquement active peut être choisie parmi les composés carbonés tels que les graphites naturels ou synthétiques et les carbones désordonnés ; les alliages de lithium de type LiₓM avec M=Sn, Sb, Si; les composés LiₓCu₆Sn₅ avec 0<x<13 ; les borates de fer ; les oxydes simples à décomposition réversible par exemple CoO, Co₂O₃, Fe₂O₃ ; les pnicures, par exemple Li_{(3-x-y)}CO_{y}N, Li_{(3-x-y)}Fe_{y}N, LiₓMnP₄, LiₓFeP₂ ; LiₓFeSb₂ ; et les oxydes à insertions tels que les titanates par exemple TiO₂, Li₄Ti₅O₁₂, LiₓNiP₂ , LiₓNiP₃, MoO₃ et WO₃ et leurs mélanges, ou tout matériau connu de l'homme du métier dans ce domaine de la technique.

L'additif conducteur électronique éventuel peut être choisi parmi les particules métalliques telles que les particules d'Ag, le graphite, le noir de carbone, les fibres de carbone, les nanofils de carbone, les nanotubes de carbone et les polymères, conducteurs électroniques, et leurs mélanges.

L'invention a aussi trait à un système électrochimique à électrolyte non aqueux qui comprend au moins une électrode telle que décrite ci-dessus.

En particulier, le système électrochimique peut être un accumulateur électrochimique rechargeable à électrolyte non aqueux comprenant une électrode positive telle que décrite ci-dessus, une électrode négative telle que décrite plus haut et un électrolyte non aqueux.

Cet électrolyte peut être solide ou liquide.

Lorsque l'électrolyte est liquide, il est constitué par exemple par une solution d'au moins un sel conducteur tel qu'un sel de lithium dans un solvant organique.

Lorsque l'électrolyte est solide, il comprend une matière polymère et un sel de lithium.

Le sel de lithium peut être choisi par exemple parmi LiAsF₆, LiClO₄, LiBF₄, LiPF₆, LiBOB, LiODBF, LiB(C₆H₅), LiCF₃SO₃, LiN(CF₃SO₂) (LiTFSI), LiC(CF₃SO₂) (LiTFSM).

Le solvant organique est préférentiellement un solvant compatible avec les constituants des électrodes, relativement peu volatile, aprotique et relativement polaire. On peut citer par exemple les éthers, les esters et leurs mélanges.

Les éthers sont notamment choisis parmi les carbonates linéaires comme le carbonate de diméthyle(DMC), le carbonate de diéthyle (DEC), le carbonate de méthyléthyle (EMC), le carbonate de dipropyle (DPC), les carbonates cycliques comme le carbonate de propylène (PC), le carbonate d'éthylène (EC), et le carbonate de butylène ; les esters d'alkyle comme les formiates, les acétates, les propionates et les butyrates ; le gamma butyrolactone, le triglyme, le tetraglyme, le lactones, le dimethylsulfoxyde, le dioxolane, le sulfolane et leurs mélanges. Les solvants sont préférentiellement des mélanges incluant EC/DMC, EC/DEC, EC/DPC et EC/DMC.

L'accumulateur peut avoir notamment la forme d'une pile bouton.

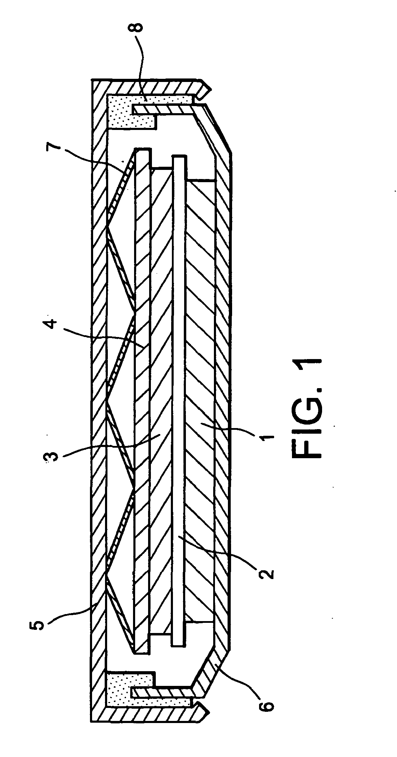

Les différents éléments d'une pile bouton, en acier inoxydable 316L, sont décrits sur la figure 1.

Ces éléments sont les suivants :
- les parties supérieures (5) et inférieures (6) du boîtier en inox,
- le joint en polypropylène (8),
- les cales en inox (4), qui servent à la fois à la découpe du lithium métal puis, plus tard, à assurer le bon contact des collecteurs de courant avec les parties externes de la pile,
- un ressort (7), qui assure le contact entre tous les éléments,
- un séparateur microporeux (2),
- des électrodes (1) (3).

L'invention concerne aussi un procédé de préparation d'une électrode telle que décrite ci-dessus dans lequel :
- on prépare un mélange pulvérulent de matière active d'électrode et éventuellement d'un ou plusieurs additifs conducteurs électroniques,
- on prépare une première solution dans un premier solvant d'un premier polymère comprenant des fonctions susceptibles de réagir avec un agent de réticulation et une seconde solution dans un second solvant d'un second polymère choisi parmi les polymères fluorés ;
- on mélange la première et la seconde solutions et on agite pour obtenir un mélange homogène des deux solutions ;
- on ajoute un agent de réticulation au mélange homogène des deux solutions de polymère ;
- on ajoute au mélange homogène des deux solutions de polymère et d'agent de réticulation le mélange pulvérulent de matière active d'électrode et éventuellement d'un ou plusieurs additifs conducteurs électroniques et on agite pour obtenir un mélange homogène dénommé encre ou pâte ;
- on enduit, on dépose, ou on imprime à l'aide d'un dispositif d'impression, ladite encre ou pâte sur un collecteur de courant ;
- on sèche l'encre ou pâte déposée ;
- on calandre, presse, l'encre ou pâte déposée séchée et le collecteur de courant.

L'encre est généralement appliquée par un procédé choisi parmi l'enduction, le couchage, l'héliogravure, la flexographie, l'offset, la sérigraphie, le jet d'encre.

La réticulation, à savoir la réaction entre le premier polymère et l'agent de réticulation a généralement lieu, selon l'invention, lors de l'étape de séchage de l'encre ou pâte.

L'invention concerne enfin une pâte ou encre comprenant, dans un solvant, de 70 à 90% en masse de matière active telle que définie plus haut, éventuellement de 1 à 15% d'un ou plusieurs additifs conducteurs électroniques et de 1 à 20%, de préférence de 1 à 10% en masse du liant selon l'invention tel que décrit plus haut, ces pourcentages étant exprimés par rapport à l'extrait sec.

La teneur en matières solides de l'encre définie par son extrait sec est généralement de 20 à 80% en poids.

L'invention va maintenant être décrite de manière plus précise dans la description qui suit, donnée à titre illustratif et non limitatif en référence aux dessins joints dans lesquels :
- la figure 1 est une vue schématique en coupe verticale d'un accumulateur sous forme de pile bouton comprenant une électrode, par exemple une électrode à tester selon l'invention ou selon l'art antérieur, telles que les électrodes préparées dans les exemples 1 à 4 ;
- les figures 2 et 3 représentent la capacité en décharge (exprimée en pourcentage de la capacité théorique atteignable) restituée, récupérée en fonction du régime de décharge pouvant aller de D/50 à 30D - sachant qu'un régime de D correspond à une décharge en 1 heure, des électrodes préparées dans les exemples 1 à 4.

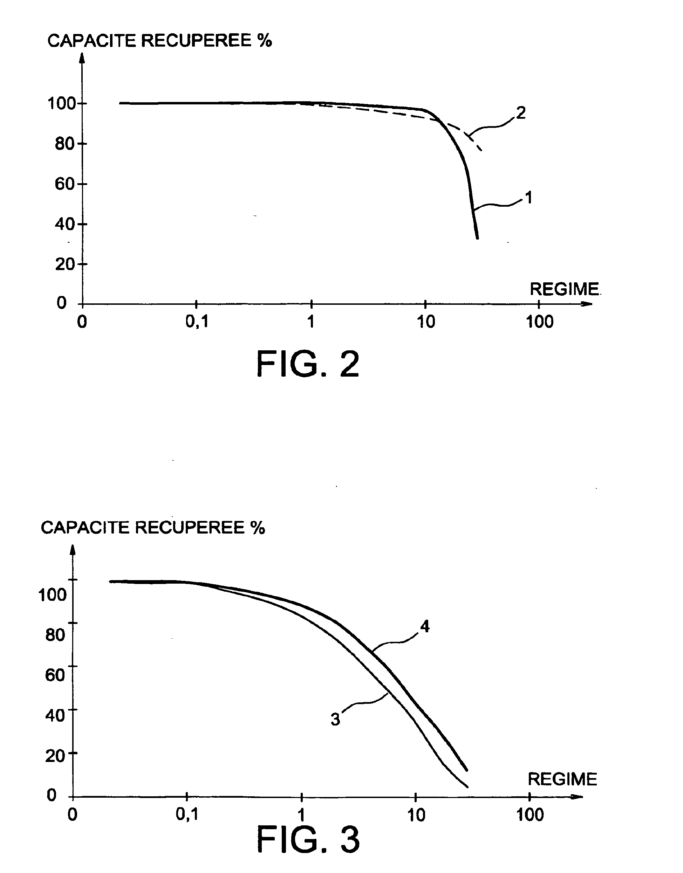

Sur la figure 2, les courbes ② et ① représentent respectivement les performances d'une électrode positive fabriquée selon l'exemple avec un liant de la présente invention comparée à une électrode réalisée selon l'exemple 1 avec un liant PVDF classique selon l'art antérieur.

Sur la figure 3, les courbes ④ et ③ représentent respectivement les performances d'une électrode négative fabriquée selon l'exemple 4 avec le liant de la présente invention comparée à une électrode selon l'exemple 3 réalisée avec un liant PVDF classique selon l'art antérieur.

Cette description se réfère plus particulièrement à un mode de réalisation dans lequel on fabrique une électrode comprenant un liant dans lequel le premier polymère est un polymère hydroxylé tel qu'un PVA ou un PVA-co-PVAc, et l'agent de réticulation est un dialdéhyde, mais la description qui suit pourra facilement être étendue à tout polymère et à tout agent de réticulation.

La première étape lors de la fabrication, élaboration d'une électrode positive ou négative consiste à mélanger intimement la matière active et les éventuels matériaux, additifs conducteurs électroniques.

Ainsi, le matériau actif d'anode ou de cathode tel qu'il a été décrit plus haut et un ou plusieurs additifs conducteurs électroniques tels que mentionnés dans ce qui précède, sont-ils préalablement pesés puis placés dans un dispositif de broyage tel qu'un bol de broyage manuel ou mortier.

On peut ajouter une petite quantité d'un diluant tel que de l'hexane au mélange pulvérulent pour favoriser le broyage.

On poursuit le broyage pendant la durée nécessaire par exemple 15 à 20 minutes pour obtenir un mélange intime de tous les constituants. Par mélange intime, on entend par exemple qu'il n'y a pas de ségrégation.

On évapore ensuite le diluant tel que l'hexane à partir du mélange pulvérulent par exemple en plaçant celui-ci dans une étuve à température généralement de 50 à 80°C, par exemple de 55°C.

On a vu que la présente invention est notamment basée sur le fait qu'il est possible de stabiliser un mélange de polymères contenant un polymère fluoré tel que le PVDF, ou l'un de ses dérivés tel que le PVDF-HFP, avec un polymère hydroxylé. Avant la réticulation, un mélange des deux polymères en solution est donc réalisé de manière à ce que la séparation des polymères, ne puisse avoir lieu au repos qu'au bout de plusieurs heures, par exemple au bout de 1 à 2 heures.

Ainsi, pour que ce phénomène de séparation ou démixtion ne se produise pas dans un délai trop court (moins d'une heure par exemple), des premiers polymères (P1) par exemple un polymère hydroxylé,de préférence un PVA-co-PVAc et des seconds polymères (P2), un polymère fluoré, de préférence un PVDF, de poids moléculaire élevés sont utilisés préférentiellement, et vigoureusement mélangés.

La solubilisation de longues chaînes macromoléculaires dans le solvant commun, de préférence la N-méthyl-pyrollidone, entraîne par voie de conséquence un mélange de polymères de forte viscosité, par exemple proche de 1 Pa.s.

Les enchevêtrements sont ainsi plus difficiles à se défaire par reptation des chaînes macromoléculaires et le mélange peut être stabilisé par l'adjonction de l'agent réticulant du polymère P1 avant que la démixtion n'ait lieu. A l'état liquide, c'est-à-dire dans le système polymères P1 et P2 + solvant par exemple NMP + agent réticulant ; il y a établissement de liaisons hydrogène entre l'agent réticulant et les fonctions hydroxyles portées par le polymère P1, et formation d'un gel de PVA-co-PVAc. Les liaisons covalente seront crées ultérieurement lors du séchage par élimination de molécules d'eau.

Le premier polymère formant le réseau tridimensionnel, suite à sa réticulation, est par exemple un poly(acétate de vinyle)-co-poly(alcool vinylique) ou tout autre polymère hydroxylé soluble en milieu organique, réticulé ou non, et dont le dérivé non hydroxylé, c'est-à-dire le dérivé à partir duquel est préparé le polymère hydroxylé par réaction d'hydrolyse, est miscible avec les polymères fluorés de type PVDF ou PVDF-HFP par exemple.

Les PVA-co-PVAc mis en oeuvre selon l'invention ont généralement un taux d'hydrolyse supérieur ou égal à 5% (c'est-à-dire qu'ils contiennent au moins 5% en mole d'alcool polyvinylique par exemple de 5 à 99%, et ils ont une masse molaire moyenne en poids comprise entre 5000 et plusieurs centaines de milliers de g/mol par exemple 600000.

Un PVA complètement hydrolysé (99%) contient toujours des fonctions acétate résiduelles. Le schéma suivant illustre la réaction d'hydrolyse des fonctions acétate en fonctions hydroxyle :

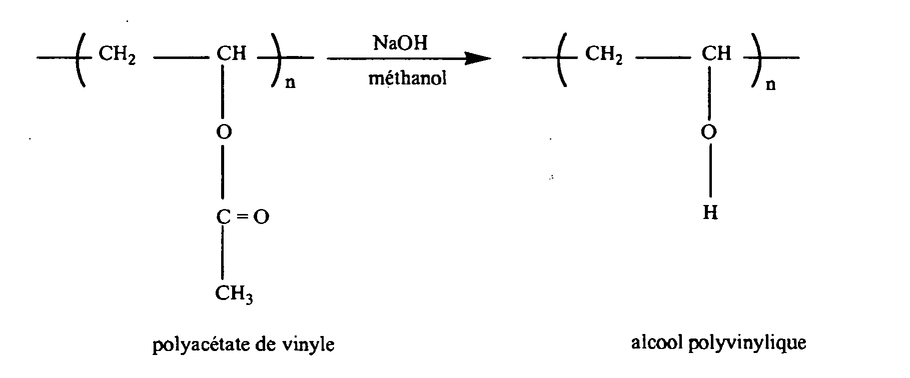

Le second polymère est fluoré, ce peut être du polyfluororure de vinylidène (PVDF) ou l'un de ses dérivés tel que le poly(fluorure de vinylidène-cohexafluoropropylène) (PVDF-HFP) par exemple.

Le premier polymère par exemple hydroxylé (P1) et le second polymère fluoré (P2) doivent être solubles à raison de 2 à 30% en poids dans un solvant commun.

La concentration est choisie en fonction de la masse moléculaire (molaire) de chacun des polymères, en effet, plus la masse moléculaire est élevée et plus la concentration maximale en poids d'un polymère donné dans le solvant commun devient faible, au delà de cette concentration, il y a gélification.

De préférence, le solvant utilisé est la N-méthyl-2=pyrrolidone. De préférence, un PVDF d'une masse molaire de 160000 g/mol sera dissous à 12% dans la N-méthyl pyrrolidone tandis qu'un PVA-co-PVAc d'une masse molaire de 250000 g/mol sera dissous à 5% dans le même solvant de manière à ce que les deux solutions S1 et S2 aient des viscosités voisines.

Le PVAc pur (non hydrolysé) est parfaitement miscible avec les polymères fluorés de type P2. Plus le taux d'hydrolyse du PVA-co-PVAc augmente (c'est-à-dire, la plus part de PVA dans le copolymère PVA-PVAc augmente), plus la compatibilité avec les polymères fluorés de type P2 décroît.

L'hydrolyse quasiment totale du PVA-co-PVAc en PVA conduit à un polymère non miscible avec les polymères de type P2 et un phénomène de démixtion rapide est observé lorsque les deux polymères sont en présence.

Pour réaliser un mélange intime des deux polymères P1 et P2, la réaction de réticulation ayant lieu majoritairement lors de l'étape de séchage, il faut de préférence partir de solutions polymères présentant des viscosités proches, par exemple de 1 Pa.s.

De préférence, et afin d'éviter un phénomène de démixtion trop rapide (séparation des deux polymères), il est préférable d'utiliser un PVA-co-PVAc ayant une teneur maximale en PVA inférieure à 95% afin de conserver une part résiduelle de PVAc miscible avec le second polymère fluoré.

Les polymères fluorés de type P2 présentent une tension superficielle égale ou inférieure à 23 mN/m. Le PVA complètement hydrolysé P1 présente une tension superficielle proche de 60 mN/m. Afin d'être utilisable sur un système imprimant, l'encre doit présenter une tension superficielle comprise entre 35 et 40 mN/m. Afin de compenser la faible tension superficielle du polymère de type P2 il est important que le taux de polymère P1 et dans le mélange, le liant, soit élevé, le taux de polymère P1 généralement de 40 à 80 % en poids, de préférence proche de 50%, et le taux de polymère P2 (fluoré) est donc généralement de 20 à 60 % en poids, de préférence 50%.

La solution S1 de polymère P1 dans un solvant tel que la N-méthylpyrrolidone et la solution de polymère P2 de préférence dans le même solvant, ces deux solutions ayant une viscosité proche sont mélangées dans les proportions désirés par exemple à l'aide d'un agitateur mécanique à cisaillement pendant la durée nécessaire par exemple de 10 à 30 minutes, notamment 30 minutes, pour obtenir un mélange homogène.

On ajoute ensuite à ce mélange homogène des solutions S1 et S2, la quantité d'agent de réticulation désirée et on procède ensuite à une agitation dans un appareil conforme à celui mentionné ci-dessus pendant la durée nécessaire par exemple de 2 à 10, notamment 5 minutes, pour obtenir un mélange homogène.

Une fois la masse moléculaire moyenne en poids et le degré d'hydrolyse du PVA-co-PVAc choisis, par exemple 250000 g/mol et 95% d'hydrolyse, comme indiqué plus haut, l'agent de réticulation réagissant avec les fonctions hydroxyle est ajouté en excès de manière à ce que toutes les fonctions hydroxyles soient consommées durant la réticulation intervenant pendant l'étape de séchage.

Ainsi, pour consommer la totalité des fonctions hydroxyles d'un Polymère P1, par exemple un PVA-co-PVAc de masse moléculaire moyenne en poids de 250000 g/mol et ayant un degré d'hydrolyse de 95%, il est nécessaire d'ajouter au mélange environ 2% d'agent de réticulation, par exemple l'ethanedial, par rapport à la masse de polymère P1 introduite dans le mélange.

De manière générale, la quantité d'agent de réticulation ajoutée représente de 2 à 5% en masse, de préférence de 2% par rapport à la masse de polymère P1.

L'ajout de l'agent de réticulation dans le milieu va donner lieu à des liaisons hydrogène entre les fonctions hydroxyles du polymère P1 et les fonctions aldéhyde de l'agent de réticulation. La réaction de couplage aura lieu principalement et même uniquement durant l'étape de séchage alors que des molécules d'eau seront formées et éliminées par condensation. Les propriétés visco-élastiques des polymères en présence sont contrôlées au préalable à l'aide d'un rhéomètre de type cône-plan.

Le mélange pulvérulent, de la matière active, et éventuellement des matériaux conducteurs électroniques, préparé comme décrit plus haut est ensuite ajouté au mélange des solutions S1 et S2 contenant l'agent de réticulation. On agite le tout par exemple dans un appareil analogue à celui déjà utilisé ci-dessus pendant une durée généralement de 10 à 30 minutes par exemple de 30 minutes.

Durant cette opération, il ne faut pas que la viscosité soit trop élevée car l'augmentation de la température en résultant pourrait faire réticuler l'encre, pâte, dans le récipient, pot de mélange. Le contrôle de la viscosité peut se faire, par exemple, par ajout ponctuel de solvant.

Par exemple, le glyoxal peut réagir avec les fonctions hydroxyles des motifs de PVA d'un copolymère PVA-co-PVAc à une température proche de 35°C. Si le mélange est très visqueux, les hélices du mélangeur vont rapidement faire augmenter la température au sein du mélange et le glyoxal sera susceptible de réagir en partie avant le séchage.

Cet effet peut être évité par exemple en utilisant un pot thermostaté pour réguler la température et en diminuant la vitesse d'agitation. Même si le glyoxal ne réagit pas, il est susceptible de former des liaisons hydrogène.

Par un choix judicieux de l'agent de réticulation et de sa proportion relative dans le mélange, la tension superficielle, la viscosité et les propriétés rhéologiques de l'encre peuvent être contrôlés et ajustés aisément afin que ladite encre soit utilisable dans tout équipement de transfert ou d'impression : enduction, couchage, héliogravure, flexographie, offset, sérigraphie, jet d'encre, etc...

L'encre ou pâte obtenue contient généralement de 70 à 95% par exemple 70% en masse de matière active, éventuellement de 1 à 15% d'un ou plusieurs additif(s) conducteur(s) électroniques et de 1 à 20%, de préférence de 1 à 10% -du liant de l'invention.

Les pourcentages exprimés ci-dessus sont exprimés par rapport la teneur en matières solides de l'encre définie par son extrait sec, généralement de 20 à 80% en poids (matière solide restante après séchage par rapport à la masse totale avant séchage et évaporation du solvant). L'encre contient en effet en outre une certaine quantité de solvant pour lui donner la consistance voulue.

L'encre ainsi réalisée est ensuite enduite ou déposée sur un collecteur de courant qui peut être une feuille ou une feuille d'aluminium dans le cas d'un cathode et une feuille ou une feuille de cuivre, nickel, ou aluminium dans le cas d'une anode.

L'encre, pâte, déposée est ensuite séchée généralement dans les conditions suivantes : 55°C pendant une douzaine d'heures environ. Avant d'être utilisées, les électrodes sont re-séchées à 80°C sous vide pendant 24 heures.

Au cours de ce séchage, suivant l'étape d'impression ou d'enduction de l'encre d'électrode, une partie des fonctions réticulables par exemple les fonctions hydroxyle du polymère P1 réagit avec un agent de réticulation par exemple de la famille des dialdéhydes pour créer un réseau tridimensionnel dans lequel le polymère fluoré P2 se trouve emprisonné, enchevêtré. Grâce à cette structure le mélange des deux polymères reste stable et aucune démixtion n'est observée lors de l'étape de séchage.

L'invention va maintenant être décrite en référence aux exemples suivants donnés à titre illustratif et non limitatif :

### EXEMPLES

Dans les exemples 1 à 4 qui suivent, on prépare des électrodes comprenant un liant selon l'invention (exemples 2 et 4) ou un liant classique de l'art antérieur (exemples comparatifs 1 et 3).

### Exemple 1 - comparatif

Dans cet exemple, on prépare une électrode comprenant un liant non-conforme à l'invention qui est du polyfluorure de vinylidène (PVDF).

Le taux de liant dans l'électrode finale est de 6% en poids

Une solution de PVDF à 12% dans la N-méthyl-pyrrolidone (NMP) est préparée en dissolvant 6 g de PVDF dans 44 g de NMP.

82 g de LiCoO₂ préalablement mélangés puis broyés dans l'hexane avec 6 g de carbone et 6 g de graphite (additifs conducteurs électroniques) sont ajoutés progressivement à cette solution.

L'encre obtenue est enduite sur un feuillard d'aluminium , l'électrode est ensuite séchée à 80°C sous vide puis comprimée jusqu'à l'obtention d'une porosité comprise entre 30 et 40%.

### Exemple 2

Dans cet exemple, on prépare une électrode comprenant un liant selon l'invention qui est du polyfluorure de vinylidène (PVDF) avec du poly(vinylalcool)-co-poly(vinyl-acétate)(PVA-co-PVAc) réticulé avec 2% en masse d'éthanedial par rapport au poids de PVA-co-PVAc.

Le taux de liant global dans l'électrode finale est de 6% en poids

Une solution de PVDF à 12% dans la N-méthyl-pyrrolidone (NMP) est préparée en dissolvant 3 g de PVDF dans 22 g de NMP puis mélangée avec une solution de PVA-co-PVAc préparée en dissolvant 3 g de PVA-co-PVAc dans 60 g de NMP.

82 g de LiCoO₂ préalablement mélangés puis broyés dans l'hexane avec 6 g de carbone et 6 g de graphite (additifs conducteurs électroniques) sont ajoutés progressivement à cette solution.

0,06 g d'éthanedial sont alors ajoutés au mélange sous agitation.

L'encre obtenue est enduite sur un feuillard d'aluminium , l'électrode est ensuite séchée à 80°C sous vide puis comprimée jusqu'à l'obtention d'une porosité comprise entre 30 et 40%.

### Exemple 3 - comparatif

Dans cet exemple, on prépare une électrode comprenant un liant non-conforme à l'invention qui est du polyfluorure de vinylidène (PVDF).

Le taux de liant dans l'électrode finale est de 6% en poids

Une solution de PVDF à 12% dans la N-méthyl-pyrrolidone (NMP) est préparée en dissolvant 6 g de PVDF dans 44 g de NMP.

82 g de Li₄Ti₅O₁₂ préalablement mélangés puis broyés dans l'hexane avec 6 g de carbone et 6 g de graphite (additifs conducteurs électroniques) sont ajoutés progressivement à cette solution.

L'encre obtenue est enduite sur un feuillard d'aluminium , l'électrode est ensuite séchée à 80°C sous vide puis comprimée jusqu'à l'obtention d'une porosité comprise entre 40 et 60%.

### Exemple 4

Dans cet exemple, on prépare une électrode comprenant un liant selon l'invention qui est du polyfluorure de vinylidène (PVDF) avec du poly(vinylalcool)-co-poly(vinyl-acétate)(PVA-co-PVAc) réticulé avec 2% en masse d'éthanedial par rapport au poids de PVA-co-PVAc.
Taux de liant global dans l'électrode finale : 6 % en poids

Une solution de PVDF à 12% dans la N-méthyl-pyrrolidone (NMP) est préparée en dissolvant 3 g de PVDF dans 22 g de NMP puis mélangée avec une solution de PVA-co-PVAc préparée en dissolvant 3 g de PVA-co-PVAc dans 60 g de NMP.

82 g de LiCoO₂ préalablement mélangés puis broyés dans l'hexane avec 6 g de carbone et 6 g de graphite (additifs conducteurs électroniques) sont ajoutés progressivement à cette solution.

0,06 g d'éthanedial sont alors ajoutés au mélange sous agitation.

L'encre obtenue est enduite sur un feuillard d'aluminium , l'électrode est ensuite séchée à 80°C sous vide puis comprimée jusqu'à l'obtention d'une porosité comprise entre 30 et 40%.

Toutes les électrodes préparées, citées ci-dessus dans les exemples 1 à 4 ont été testées électrochimiquement en cellule format pile bouton.

Avant d'être testées en format pile bouton, les électrodes préparées dans les exemples 1 à 4 sont séchées sous vide à 80°C durant 24 heures avant d'être introduites en boîte à gant pour le montage des accumulateurs.

Chaque pile bouton est alors montée en respectant scrupuleusement le même protocole. Sont ainsi empilés à partir du fond du boîtier de la pile comme cela est montré sur la figure 1 :
- l'électrode à tester (1) 0 14 mm,
- 200 µl d'électrolyte, LiPF₆ 1 mole/litre dans un mélange EC/DMC 1:1
- un séparateur microporeux de polypropylène Celgard^{©} (2) 0 16,5 mm,
- une pastille de lithium Ø 16 mm (3) ou un autre type d'électrode choisi parmi les matériaux classiques ayant été utilisés dans la technique pour une électrode positive ou négative en milieu non aqueux.
- un disque ou cale en inox (4),
- un couvercle en inox (5) et un fond en inox (6),
- un ressort en inox (7) et un joint en polypropylène (8).

Le boîtier en inox est alors fermé à l'aide d'une sertisseuse, le rendant parfaitement étanche à l'air. Pour vérifier si les piles sont opérationnelles, celles-ci sont contrôlées par la mesure de la tension à l'abandon.

Du fait de la forte réactivité du lithium et de ses sels à l'oxygène et à l'eau, la mise en pile bouton se fait en boîte à gants. Celle-ci est maintenue en légère surpression sous atmosphère d'argon anhydre. Des capteurs permettent de surveiller continuellement la concentration en oxygène et en eau. Typiquement, ces concentrations doivent rester inférieures au ppm.

On utilise une contre-électrode en lithium métal ou un autre type d'électrode choisi parmi les matériaux classiques ayant été utilisés dans l'état de la technique pour une électrode positive ou négative en milieu non aqueux et l'électrode de composition décrite dans les divers exemples en face. L'électrolyte, contient du LiPF₆ à une mole par litre dans un mélange EC/DMC 1:1.

Les électrodes préparées dans les exemples 1 à 4 et montées dans les piles boutons conformément à la procédure décrite ci-dessus subissent un cyclage effectué à 140 mAh/g de LiCoO₂ lorsque l'électrode est une électrode positive (Exemples 1 et 2) et à 160 mAh/g de Li₄Ti₅O₁₂ lorsque l'électrode est une électrode négative (Exemples 3 et 4).

Ces résultats de ces cyclages sont donnés sur les figures 2 et 3. -

La courbe 1 sur la figure 2 représente le résultat de cyclage obtenu sur des électrodes grammées à 0,6 mAh/cm² préparées selon l'exemple 1, et présentant après compression une porosité de 30 %. La capacité totale théorique calculée pour 140 mAh/g de matériaux est récupérée à D/50. L'électrode peut restituer jusqu'à 33% de sa capacité à 30D soit en 2 minutes.

La courbe 2 sur la figure 2 représente le résultat de cyclage obtenu sur des électrodes grammées à 0,6 mAh/cm² préparées selon l'exemple 2, et présentant après compression une porosité de 35 %. La capacité totale théorique calculée pour 140 mAh/g de matériaux est récupérée à D/50. L'électrode peut restituer jusqu'à 80% de sa capacité à 30D soit en 2 minutes.

La courbe 3 sur la figure 3 représente le résultat de cyclage obtenu sur des électrodes préparées selon l'exemple 3 et présentant après compression une porosité de 30 %. La capacité totale théorique calculée pour 160 mAh/g de matériaux est récupérée à D/50. L'électrode peut restituer jusqu'à 5,3% de sa capacité à 30D soit en 2 minutes.

La courbe 4 sur la figure 3 représente le résultat de cyclage obtenu sur des électrodes grammées à 0,6 mAh/cm² préparées selon l'exemple 4 et présentant après compression une porosité de 35 %. La capacité totale théorique calculée pour 140 mAh/g de matériaux est récupérée à D/50. L'électrode peut restituer jusqu'à 13,5% de sa capacité à 30D soit en 2 minutes.

Les tests effectués montrent les résultats supérieurs obtenus avec les électrodes selon l'invention préparés avec le liant spécifique selon l'invention.

## Revendications

1. Liant pour électrode de système électrochimique à électrolyte non aqueux, ledit liant comprenant un premier polymère comprenant des fonctions susceptibles de réagir avec un agent de réticulation, réticulé avec un agent de réticulation, le premier polymère réticulé formant un réseau tridimensionnel dans lequel est emprisonné un second polymère qui est un polymère fluoré choisi parmi les polymères du fluorure de vinylidène (PVDF), les copolymères de celui-ci tels que le poly(fluorure de vinylidène-hexafluoropropylène) (PVDF-HFP) et leurs mélanges liant dans lequel le premier polymère est un polymère hydroxylé choisi parmi les copolymères d'alcool vinylique et d'acétate de vinyle (PVA-co-PVAC) ayant une teneur maximale en PVA inférieure ou égale à 95% ; dans lequel l'agent de réticulation est choisi parmi les composés dialdéhydiques, de préférence parmi les dialdéhydes aliphatiques comme l'éthanedial et le glutaraldéhyde ; et les dialdéhydes aromatiques comme l'ortho-phtalaldéhyde, le méta-phtalaldéhyde, le paraphtalaldéhyde, le 2,6-pyridinedicarbaldéhyde et le 2,5-thiophènedicarbaldéhyde ; et dans lequel le liant comprend de 2 à 5% en poids d'agent de réticulation par rapport au poids du premier polymère.

2. Liant selon la revendication 1, dans lequel les PVA-co-PVAC ont une masse molaire moyenne en poids de 5000 à 600000 g/mol.

3. Liant selon la revendication 1, dans lequel le premier polymère est un PVA-co-PVAC et le polymère réticulé avec l'agent de réticulation répond à la formule suivante : 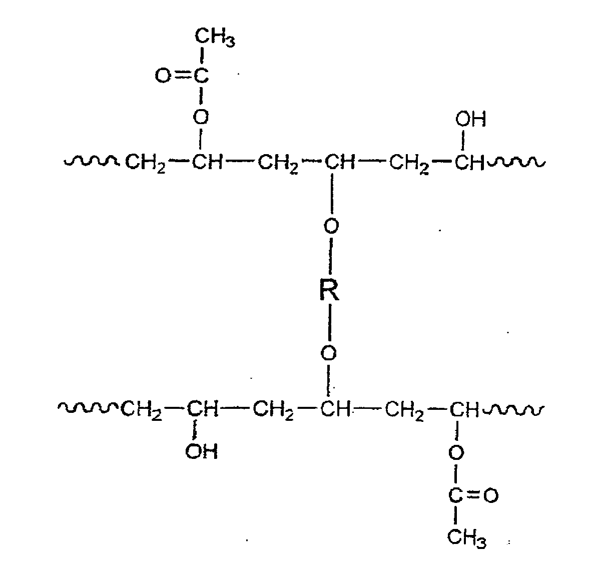 dans laquelle R représente 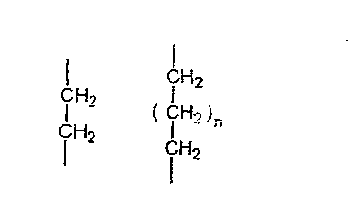 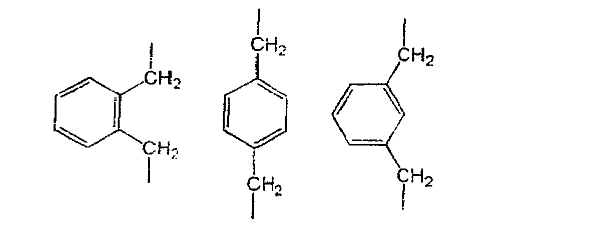 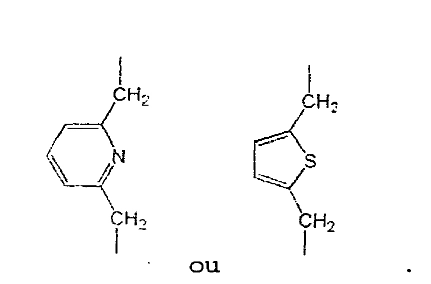 où n est un nombre entier de 0 à 10.

4. Liant selon l'une quelconque des revendications précédentes comprenant de 10 à 90% en poids du premier polymère et de 10 à 90% en poids du second polymère par rapport au poids total du liant.

5. Electrode de système électrochimique à électrolyte non aqueux comprenant un liant selon l'une quelconque des revendications précédentes, une matière électrochimiquement active, éventuellement un ou des additif(s) conducteur(s) électronique(s), et un collecteur de courant.

6. Electrode selon la revendication 5, qui est une électrode positive d'un accumulateur électrochimique rechargeable à électrolyte non aqueux, dans lequel la matière électrochimiquement active est choisi de de préférence parmi LioO₂; les composés dérivés de LiCoO₂ obtenus par substitution de préférence par Al, Ti, Mg, Ni et Mn, par exemple LiAlₓNi_{y}Co_{(1-x-y)}O₂ ou x <0,5 et y <1, LiNiₓMnₓCO₁₋₂ₓO₂ ; LiMn₂O₄ ; LiNiO₂ ; les composés dérivés de LiMn₂O₄ obtenus par substitution de préférence par Al, Ni et Co ; LiMnO₂ ; les composés dérivés de LiMnO₂ obtenus par substitution de préférence par Al, Ni, Co, Fe, Cr et Cu, par exemple LiMn_{0.5}Ni_{0.5}O₂ ; les olivines LiFePO₄, Li₂FeSiO₄, LiMnPO₄, LiCoPO₄ ; les phosphates et sulfates de fer hydratés ou non ; LiFe₂(PO₄)₃ ; les phosphates et les sulfates de vanadyle hydratés ou non, par exemple VOSO₄ et LiₓVOPO₄, nH₂O (0<x<3, 0<n<2) ; Li₍₁₊ₓ₎V₃O₈, 0<x<4 ; LiₓV₂O₅, nH₂O, avec 0<x<3 et 0<n<2 ; et leurs mélanges.

7. Electrode selon la revendication 5 qui est une électrode négative d'un accumulateur électrochimique rechargeable à électrolyte non aqueux, dans lequel la matière électrochimiquement active est choisie de préférence parmi les composés carbonés tels que les graphites naturels ou synthétiques et les carbones désordonnés ; les alliages de lithium de type LiₓM avec M=Sn, Sb, Si ; les composés LiₓCu₆Sn₅ avec 0<x<13 ; les borates de fer ; les oxydes simples à décomposition réversible par exemple CoO, Co₂O₃, Fe₂O₃ ; les pnicures, par exemple Li_{(3-x-y)}CO_{y}N, Li_{(3-x-y)}Fe_{y}N, LiₓMnP₄, LiₓFeP₂, LiₓFeSb₂ ; et les oxydes à insertions tels que les titanates par exemple TiO₂, Li₄Ti₅O₁₂, LiₓNiP₂, LiₓNiP₃, MoO₃, WO₃, et leurs mélanges.

8. Electrode selon l'une quelconque des revendications 5 à 7, dans laquelle l'additif conducteur électronique est choisi parmi les particules métalliques telles que les particules d'Ag, le graphite, le noir de carbone, les fibres de carbone, les nanofils de carbone, les nanotubes de carbone et les polymères conducteurs électroniques et leurs mélanges.

9. Système électrochimique comprenant au moins une électrode selon l'une quelconque des revendications 5 à 8.

10. Accumulateur électrochimique rechargeable à électrolyte non aqueux comprenant une électrode positive selon la revendication 6, une électrode négative selon la revendication 7 et un électrolyte non aqueux.

11. Accumulateur selon la revendication 10, dans lequel l'électrolyte est liquide.

12. Accumulateur selon la revendication 10, dans lequel l'électrolyte est solide.

13. Accumulateur selon la revendication 11, dans lequel l'électrolyte est constitué par une solution d'au moins un sel de lithium dans un solvant organique.

14. Accumulateur selon la revendication 12, dans lequel l'électrolyte comprend une matière polymère et un sel de lithium.

15. Accumulateur selon la revendication 13 ou 14, dans lequel le sel de lithium est choisi parmi LiAsF₆, LiClO₄, LiBF₄, LiPF₆, LiBOB, LiODBF, LiB(C₆H₅), LiCF₃SO₃, LiN(CF₃SO₂)₂ (LiTFSI), et LiC(CF₃SO₂)₃(LiTFSM).

16. Accumulateur selon la revendication 13, dans lequel le solvant organique est choisi parmi les éthers, les esters et leurs mélanges ; de préférence le solvant organique est choisi parmi les carbonates linéaires comme le carbonate de diméthyle(DMC), le carbonate de diéthyle (DEC), le carbonate de méthyléthyle (EMC), le carbonate de dipropyle (DPC) ; les carbonates cycliques comme le carbonate de propylène (PC), le carbonate d'éthylène (EC), et le carbonate de butylène ; les esters d'alkyle comme les formiates, les acétates, les propionates et les butyrates ; le gamma butyrolactone ; le triglyme ; le tetraglyme ; les lactones ; le dimethylsulfoxyde ; le dioxolane ; le sulfolane ; et leurs mélanges tels que les mélanges incluant EC/DMC, EC/DEC, EC/DPC et EC/DMC.

17. Procédé de préparation d'une électrode selon l'une quelconque des revendications 5 à 8, dans lequel :
- on prépare un mélange pulvérulent de matière active d'électrode et éventuellement d'un ou plusieurs additifs conducteurs électroniques,
- on prépare une première solution dans un premier solvant d'un premier polymère comprenant des fonctions susceptibles de réagir avec un agent de réticulation et une seconde solution dans un second solvant d'un second polymère choisi parmi les polymères fluorés ;
- on mélange la première et la seconde solutions et on agite pour obtenir un mélange homogène des deux solutions ;
- on ajoute un agent de réticulation au mélange homogène des deux solutions de polymère ;
- on ajoute au mélange homogène des deux solutions de polymère et d'agent de réticulation le mélange pulvérulent de matière active d'électrode et éventuellement d'un ou plusieurs additif(s) conducteur(s) électronique(s) et on agite pour obtenir un mélange homogène dénommé encre ou pâte ;
- on enduit, on dépose, ou on imprime à l'aide d'un dispositif d'impression, ladite encre ou pâte sur un collecteur de courant ;
- on sèche l'encre ou pâte déposée ;
- on calandre, presse, l'encre ou pâte déposée séchée et le collecteur de courant.

18. Procédé selon la revendication 17, dans lequel ladite encre est appliquée par un procédé choisi parmi l'enduction, le couchage, l'héliogravure, la flexographie, l'offset, la sérigraphie, le jet d'encre.

19. Encre, comprenant, dans un solvant, de 70 à 90% en masse de matière active éventuellement de 1 à 15% en masse d'un ou plusieurs additifs conducteurs électroniques, et de 1 à 20% en masse du liant, de préférence de 1 à 10% en masse du liant selon l'une quelconque des revendications 1 à 4.

## Claims

1. Binder for an electrode of an electrochemical system having a non-aqueous electrolyte, said binder comprising a first polymer which has functional groups capable of reacting with a crosslinking agent, and is crosslinked with a crosslinking agent, the crosslinked first polymer forming a three-dimensional network in which a second polymer which is a fluoropolymer chosen from vinylidene fluoride polymers (PVDFs), vinylidene fluoride copolymers, such as poly(vinylidene fluoride/hexafluoropropylene) (PVDF-HFP) and blends thereof is imprisoned ; binder wherein the first polymer is a hydroxylated polymer chosen from vinyl alcohol/vinyl acetate (PVA-co-PVAc) copolymers having a maximum PVA content equal to or less than 95%; wherein the crosslinking agent is chosen from: aliphatic dialdehydes, such as ethanedial and glutaraldehyde; and aromatic dialdehydes, such as *ortho*-phthalaldehyde, *meta*-phthalaldehyde, *para*-phthalaldehyde, 2,6-pyridinedicarbaldehyde and 2,5-thiophenedicarbaldehyde; and wherein the binder comprises from 2 to 5% by weight of crosslinking agent relative to the weight of the first polymer.

2. Binder according to Claim 1, in which the PVA-co-PVACs have a weight-average molecular weight of 5000 to 600 000 g/mol.

3. Binder according to Claim 1, in which the first polymer is a PVA-co-PVAC and the polymer crosslinked with the crosslinking agent satisfies the following formula: 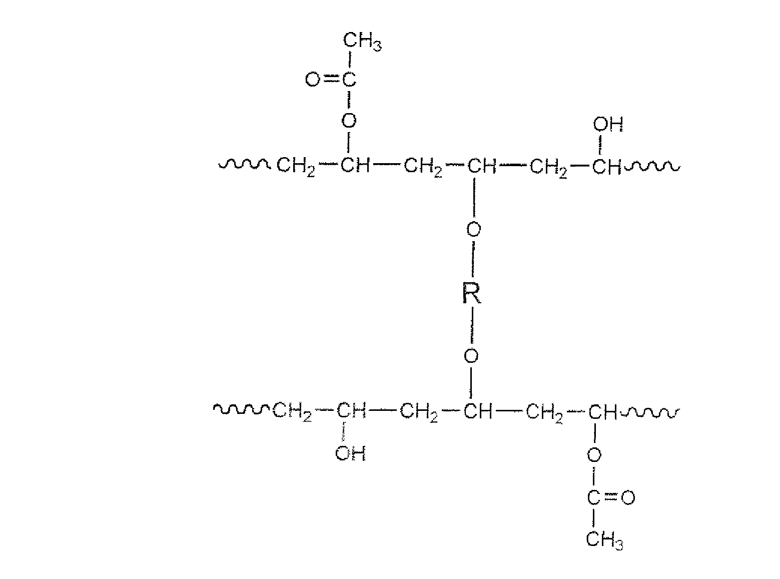 in which R represents: 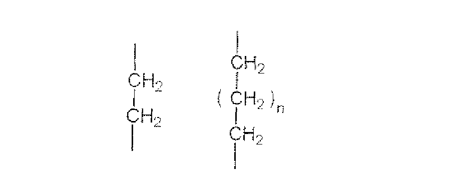 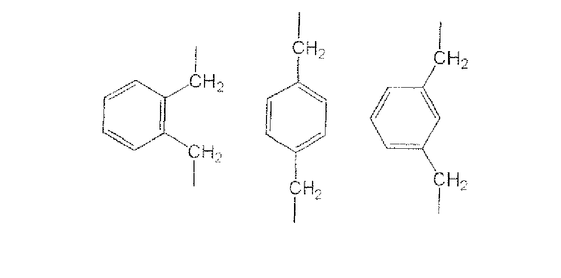 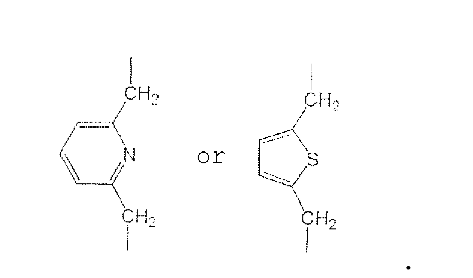 where n is an integer from 0 to 10.

4. Binder according to any one of the preceding claims, comprising from 10 to 90% by weight of the first polymer and from 10 to 90% by weight of the second polymer relative to the total weight of the binder.

5. Electrode for an electrochemical system having a non-aqueous electrolyte, comprising a binder according to any one of the preceding claims, an electrochemically active material, optionally one or more electronically conductive additives and a current collector.

6. Electrode according to Claim 5, which is a positive electrode of a rechargeable electrochemical accumulator having a non-aqueous electrolyte in which the electrochemically active material is preferably chosen from: LiCoO₂; compounds derived from LiCoO₂, these being obtained by substitution preferably with Al, Ti, Mg, Ni and Mn, for example LiAlₓNi_{y}Co_{(1-x-y)}O₂ where x < 0.5 and y < 1, and LiNiₓMnₓCo₁₋₂ₓO₂; LiMn₂O₄; LiNiO₂; compounds derived from LiMn₂O₄, these being obtained by substitution preferably with Al, Ni and Co; LiMnO₂; compounds derived from LiMnO₂, these being obtained by substitution preferably with Al, Ni, Co, Fe, Cr and Cu, for example LiMn_{0.5}Ni_{0.5}O₂; olivines LiFePO₄, Li₂FeSiO₄, LiMnPO₄ and LiCoPO₄; hydrated or non-hydrated iron phosphates and sulphates; LiFe₂(PO₄)₃; hydrated or non-hydrated vanadyl phosphates and sulphates, for example VOSO₄·nH₂O and LiₓVOPO₄·nH₂O (0<x<3 and 0<n<2); Li₁₊ₓV₃O₈ (0<x<4); LiₓV₂O₅·H₂O (0<x<3 and 0<n<2); and mixtures thereof.

7. Electrode according to Claim 5, which is a negative electrode of a rechargeable electrochemical accumulator having a non-aqueous electrolyte, in which the electrochemically active material is preferably chosen from: carbon-based compounds, such as natural or synthetic graphites and disordered carbons; lithium alloys of the LiₓM type where M=Sn, Sb or Si; LiₓCu₆Sn₅ compounds where 0<x<13; iron borates; reversibly decomposable simple oxides, for example CoO, Co₂O₃, Fe₂O₃; pnicures, for example Li_{(3-x-y)}CO_{y}N, Li_{(3-x-y)}Fe_{y}N, LiₓMnP₄, LiₓFeP₂ and LiₓFeSb₂; insertion oxides such as titanates, for example TiO₂, Li₄T₁₅O₁₂, LiₓNiP₂, LiₓNiP₃, MoO₃ and WO₃; and mixtures thereof.

8. Electrode according to any one of Claims 5 to 7, in which the electronically conductive additive is chosen from: metal particles, such as Ag particles; graphite; carbon black; carbon fibres; carbon nanowires and carbon nanotubes; and electronically conductive polymers and mixtures thereof.

9. Electrochemical system comprising at least one electrode according to any one of Claims 5 to 8.

10. Rechargeable electrochemical accumulator having a non-aqueous electrolyte, comprising a positive electrode according to Claim 6, a negative electrode according to Claim 7 and a non-aqueous electrolyte.

11. Accumulator according to Claim 10, in which the electrolyte is liquid.

12. Accumulator according to Claim 10, in which the electrolyte is solid.

13. Accumulator according to Claim 11, in which the electrolyte consists of a solution of at least one lithium salt in an organic solvent.

14. Accumulator according to Claim 12, in which the electrolyte comprises a polymer material and a lithium salt.

15. Accumulator according to Claim 13 or 14, in which the lithium salt is chosen from: LiAsF₆; LiClO₄; LiBF₄; LiPF₆; LiBOB; LiODBF; LiB(C₆H₅); LiCF₃SO₃; LiN(CF₃SO₂)₂ (LiTFSI); and LiC(CF₃SO₂)₃ (LiTFSM).

16. Accumulator according to Claim 13, in which the organic solvent is chosen from ethers, esters and mixtures thereof; preferably the organic solvent is chosen from: linear carbonates, such as dimethyl carbonate (DMC), diethyl carbonate (DEC), methylethyl carbonate (EMC) and dipropyl carbonate (DPC); cyclic carbonates, such as propylene carbonate (PC), ethylene carbonate (EC) and butylene carbonate; alkyl esters, such as formates, acetates, propionates and butyrates; γ-butyrolactone; triglyme; tetraglyme; lactones; dimethylsulphoxide; dioxolane; sulpholane; and mixtures thereof, such as mixtures including EC/DMC, EC/DEC, EC/DPC and EC/DMC.

17. Method of preparing an electrode according to any one of Claims 5 to 8, in which:
- a pulverulent mixture of active electrode material and optionally one or more electronically conductive additives is prepared;
- a first solution in a first solvent of a first polymer, having functional groups capable of reacting with a crosslinking agent, and a second solution in a second solvent of a second polymer chosen from fluoropolymers are prepared;
- the first and second solutions are mixed and stirred so as to obtain a homogeneous mixture of the two solutions;
- a crosslinking agent is added to the homogeneous mixture of the two polymer solutions;
- the pulverulent mixture of active electrode material and optionally of one or more electronically conductive additive(s) is added to the homogeneous mixture of the two polymer solutions and of the crosslinking agent, followed by stirring so as to obtain a homogeneous mixture called an ink or paste;
- said ink or paste is coated, deposited, or printed using a printing device, on a current collector;
- the ink or paste deposited is dried; and
- the dried ink or paste deposited and the current collector are calendered or pressed.

18. Method according to Claim 17, in which said ink is applied by a process chosen from coating, laminating, photogravure, offset printing, screen printing and ink-jet printing.

19. Ink, comprising, in a solvent, from 70 to 90% by weight of active material, optionally from 1 to 15% by weight of one or more electronically conductive additives and from 1 to 20% by weight of the binder, preferably from 1 to 10% by weight of the binder according to any one of Claims 1 to 4.

## Patentansprüche

1. Bindemittel für eine Elektrode eines elektrochemischen Systems mit einem nichtwässrigen Elektrolyten, wobei das Bindemittel ein erstes Polymer umfasst, das funktionelle Gruppen aufweist, die mit einem Vernetzungsmittel reagieren können, und mit einem Vernetzungsmittel vernetzt ist, wobei das erste vernetzte Polymer ein dreidimensionales Netzwerk bildet, in dem ein zweites Polymer eingeschlossen ist, das ein fluoriertes Polymer ist und das aus Vinylidenfluoridpolymeren (PVDF), dessen Copolymeren wie etwa Poly(vinylidenfluorid-hexafluorpropylen) (PVDF-HFP) und ihren Gemischen ausgewählt ist, bei dem Bindemittel das erste Polymer ein hydroxyliertes Polymer ist, das aus den Coplymeren von Vinylalkohol und Vinylacetat (PVA-co-PVAC) mit einem Höchstanteil an PVA unter oder gleich 95 % ausgewählt ist, bei dem das Vernetzungsmittel aus Dialdehydverbindungen, vorzugsweise aus aliphatischen Dialdehyden wie Ethandial und Glutaraldehyd und aromatischen Dialdehyden wie o-Phthalaldehyd, m-Phthalaldehyd, p-Phthalaldehyd, 2,6-Pyridindicarbaldehyd und 2,5-Thiophendicarbaldehyd ausgewählt ist und bei dem das Bindemittel 2 bis 5 Gew.-% Vernetzungsmittel bezogen auf das Gewicht des ersten Polymers aufweist.

2. Bindemittel gemäß Anspruch 1, bei dem die PVA-co-PVAC ein Gewichtsmittel der Molmasse von 5000 bis 600000 g/Mol aufweisen.

3. Bindemittel gemäß Anspruch 1, bei dem das erste Polymer ein PVA-co-PVAC ist und das mit dem Vernetzungsmittel vernetzte Polymer der folgenden Formel entspricht: 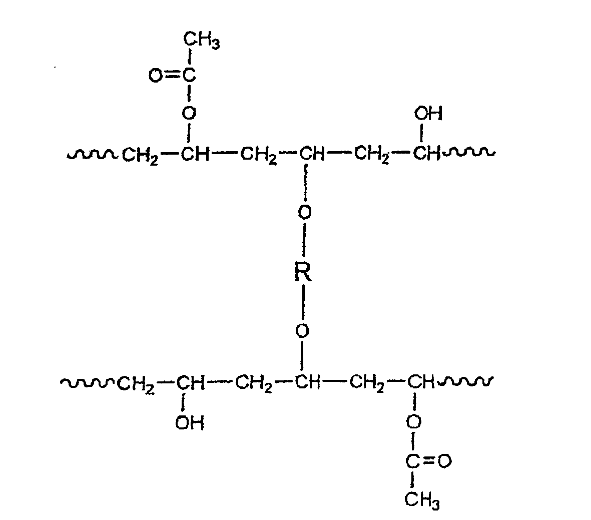 worin R 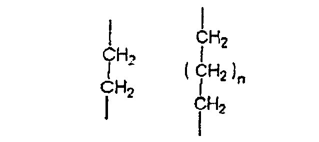 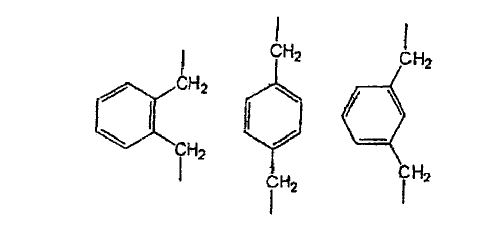 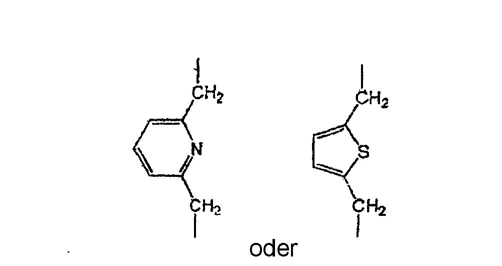 bedeutet, worin n eine ganze Zahl von 0 bis 10 ist.

4. Bindemittel gemäß einem der vorangehenden Ansprüche, umfassend 10 bis 90 Gew.-% des ersten Polymers und 10 bis 90 Gew.-% des zweiten Polymers bezogen auf das Gesamtgewicht des Bindemittels.

5. Elektrode eines elektrochemischen Systems mit einem nichtwässrigen Elektrolyten, umfassend ein Bindemittel gemäß einem der vorangehenden Ansprüche, ein elektrochemisch aktives Material, gegebenenfalls ein oder mehrere Elektronenleitfähigkeitsadditiv(e) und einen Stromableiter.

6. Elektrode gemäß Anspruch 5, die eine positive Elektrode eines wiederaufladbaren elektrochemischen Akkumulators mit einem nichtwässrigen Elektrolyten ist, bei der das elektrochemisch aktive Material vorzugsweise aus LiCoO₂; von LiCoO₂ durch Ersatz vorzugsweise durch Al, Ti, Mg, Ni und Mn abgeleitete Verbindungen, zum Beispiel LiAlₓNi_{y}CO_{(1-x-y)}O₂, worin x < 0,5 und y < 1 sind, LiNiₓMnₓCo₁₋₂ₓO₂; LiMn₂O₄; LiNiO₂; von LiMn₂O₄ durch Ersatz vorzugsweise durch Al, Ni und Co abgeleiteten Verbindungen; von LiMnO₂ durch Ersatz vorzugsweise durch Al, Ni, Co, Fe, Cr und Cu abgeleiteten Verbindungen, zum Beispiel Limn_{0,5}Ni_{0,5}O₂, den Olivinen LiFePO₄, Li₂FeSiO₄, LiMnPO₄, LiCoPO₄; hydratisierten oder nicht hydratisierten Eisenphosphaten und -sulfaten; LiFe₂(PO₄)₃; hydratisierten oder nicht hydratisierten Vanadinphosphaten und -sulfaten, zum Beispiel VOSO₄ und LiₓVOPO₄, n H₂O (0 < x < 3, 0 < n < 2); Li₍₁₊ₓ₎V₃O₈ (0 < x < 4); LiₓV₂O₅, n H₂O (mit 0 < x < 3 und 0 < n < 2); und ihren Gemischen ausgewählt ist.

7. Elektrode gemäß Anspruch 5, die eine negative Elektrode eines wiederaufladbaren elektrochemischen Akkumulators mit einem nichtwässrigen Elektrolyten ist, bei der das elektrochemisch aktive Material vorzugsweise aus Kohlenstoffverbindungen wie natürlichen oder synthetischen Graphiten und ungeordnetem Kohlenstoff; Lithiumlegierungen des Typs LiₓM mit M = Sn, Sb, Si; den Verbindungen LiₓCu₆Sn₅ mit 0 < x < 13; Eisenboraten; einfachen, umkehrbar zersetzbaren Oxiden, zum Beispiel CoO, Co₂O₃, Fe₂O₃; Pnictiden, zum Beispiel Li_{(3-x-y)}Co_{y}N, Li_{(3-x-y)}Fe_{y}N, Li_{X}MnP₄, LiₓFeP₂, Li_{X}FeSb₂ und Insertionsoxiden wie etwa Titanaten, zum Beispiel TiO₂, Li₄Ti₅O,₂, LiₓNiP₂, LiₓNiP₃, MoO₃, WO₃ und ihren Gemischen ausgewählt ist.

8. Elektrode gemäß einem der Ansprüche 5 bis 7, bei das Elektronenleitfähigkeitsadditiv aus Metallteilchen wie Ag-Teilchen, Graphit, Ruß, Kohlenstofffasern, Kohlenstoffnanodrähte, Kohlenstoffnanoröhren und elektronenleitenden Polymeren und ihren Gemischen ausgewählt ist.

9. Elektrochemisches System umfassend wenigstens eine Elektrode gemäß einem der Ansprüche 5 bis 8.

10. Wiederaufladbarer elektrochemischer Akkumulator mit einem nichtwässrigen Elektrolyten, der eine positive Elektrode gemäß Anspruch 6, eine negative Elektrode gemäß Anspruch 7 und einen nichtwässrigen Elektrolyten umfasst.

11. Akkumulator gemäß Anspruch 10, bei dem der Elektrolyt flüssig ist.

12. Akkumulator gemäß Anspruch 10, bei dem der Elektrolyt fest ist.

13. Akkumulator gemäß Anspruch 11, bei dem sich der Elektrolyt aus einer Lösung wenigstens eines Lithiumsalzes in einem organischen Lösungsmittel zusammensetzt.

14. Akkumulator gemäß Anspruch 12, bei dem der Elektrolyt ein Polymermaterial und ein Lithiumsalz umfasst.

15. Akkumulator gemäß Anspruch 13 oder 14, bei dem das Lithiumsalz aus LiAsF₆, LiClO₄, LiBF₄, LiPF₆, LiBOB, LiODBF, LiB(C₆H₅), LiCF₃SO₃, LiN(CF₃SO₂)₂ (LiTFSI) und LiC(CF₃SO₂)₃ (LiTFSM) ausgewählt ist.

16. Akkumulator gemäß Anspruch 13, bei dem das organische Lösungsmittel aus Ethern, Estern und ihren Gemischen ausgewählt ist und das organische Lösungsmittel vorzugsweise aus geradkettigen Carbonaten wie Dimethylcarbonat (DMC), Diethylcarbonat (DEC), Methylethylcarbonat (EMC), Dipropylcarbonat (DPC); cyclischen Carbonaten wie Propylencarbonat (PC), Ethylencarbonat (EC) und Butylencarbonat; Alkylestern wie Formiaten, Acetaten, Propionaten und Butyraten; gamma-Butyrolacton; Triglyme; Tetraglyme; Lactonen; Dimethylsulfoxid; Dioxolan; Sulfolan; und ihren Gemischen wie etwa EC/DMC, EC/DEC, EC/DCP und EC/DMC einschließenden Gemischen ausgewählt ist.

17. Verfahren zur Herstellung einer Elektrode gemäß einem der Ansprüche 5 bis 8, wobei:
- ein pulverförmiges Gemisch des aktiven Elektrodenmaterials und gegebenenfalls eines oder mehrerer Elektronenleitfähigkeitsadditive hergestellt wird,
- eine erste Lösung in einem ersten Lösungsmittel eines ersten Polymers, das funktionelle Gruppen aufweist, die mit einem Vernetzungsmittel reagieren können, und eine zweite Lösung in einem zweiten Lösungsmittel eines aus fluorierten Polymeren ausgewählten zweiten Polymers hergestellt wird;
- die erste und zweite Lösung gemischt werden und zum Erhalt eines homogenen Gemischs der beiden Lösungen gerührt werden;
- dem homogenen Gemisch der beiden Polymerlösungen ein Vernetzungsmittel zugefügt wird;
- dem homogenen Gemisch der beiden Polymerlösungen und des Vernetzungsmittels das pulverförmige Gemisch des aktiven Elektrodenmaterials und gegebenenfalls ein oder mehrere Elektronenleitfähigkeitsadditive zugefügt werden und zum Erhalt eines Tinte oder Paste genannten homogenen Gemischs gerührt wird;
- mit Hilfe einer Druckvorrichtung diese Tinte oder Paste auf einen Stromableiter gestrichen, aufgetragen oder gedruckt wird; und
- die aufgetragene Tinte oder Paste getrocknet wird und
- die aufgetragene getrocknete Tinte oder Paste und der Stromableiter kalandriert oder gepresst werden.

18. Verfahren gemäß Anspruch 17, wobei diese Tinte durch ein aus Überziehen, Beschichten, Tiefdruck, Flexodruck, Offsetdruck, Siebdruck und Tintenstrahldruck ausgewähltes Verfahren aufgebracht wird.

19. Tinte umfassend in einem Lösungsmittel 70 bis 90 Massen-% aktives Material, gegebenenfalls 1 bis 15 Massen-% eines oder mehrerer Elektronenleitfähigkeitsadditive und 1 bis 20 Massen-% Bindemittel, vorzugsweise 1 bis 10 Massen-% Bindemittel gemäß einem der Ansprüche 1 bis 4.
